# EUROPEAN PATENT SPECIFICATION

(11) **EP 3 457 036 B1**
(45) Date of publication and mention of the grant of the patent: **06.01.2021**
(21) Application number: 17191594.5
(22) Date of filing: 18.09.2017
(51) Int. Cl.: F24F 1/06, B65G 7/12, B65D 71/02

(54) **HEAT SOURCE UNIT ASSEMBLY OF A HEAT PUMP**
ANORDNUNG MIT WÄRMEQUELLENEINHEIT EINER WÄRMEPUMPE
ENSEMBLE AVEC UNE UNITÉ DE SOURCE DE CHALEUR D'UNE POMPE À CHALEUR

(43) Date of publication of application: 20.03.2019
(73) Proprietor: Daikin Europe N.V., 8400 Oostende (BE); DAIKIN INDUSTRIES, LTD., Osaka-shi, Osaka 530-8323 (JP)
(72) Inventor: Vrazina, Lukas, 8400 Oostende (BE); Debaets, Stefanie, 8400 Oostende (BE); Surmont, Tom, 8400 Oostende (BE)
(74) Representative: Hoffmann Eitle

(56) References cited:
- EP-A1- 0 743 493
- JP-A- 2011 158 163
- JP-A- 2011 257 029
- US-A- 6 044 657
- US-A1- 2014 000 061
- US-B1- 8 640 632

## Description

### TECHNICAL FIELD

The present disclosure relates to a heat source unit assembly of a heat pump, such as an air heat pump. Particularly, the present disclosure relates to handling of the heat source unit, such as lifting from a packaging and carrying to the installation site at the time of installation. In another aspect, the present disclosure additionally relates to the packaging of those heat source units for transportation to the installation site.

### BACKGROUND

Heat source units are generally positioned outdoors and also referred to as outdoor units. Yet, under certain circumstances, the heat source units may also be positioned indoors. A heat source unit usually comprises several components of the heat pump, such as the heat source heat exchanger for exchanging heat with the heat source, for example air. The heat source units may also comprise other components such as a fan for inducing an air flow through the heat exchanger in case of an air heat pump and/or the compressor of the refrigerant circuit of the heat pump. As such, the heat source units are relatively heavy and may weigh up to 60 kg and even more.

The heat source unit is generally packaged for transportation to the installation site. The packaging comprises a bottom portion, such as a pallet and/or a bottom tray receiving and supporting a bottom portion (lower end portion) of the heat source unit. In other words, the heat source unit rests on the bottom of the packaging. The packaging may also comprise side walls and a top encasing the heat source unit. Upon removing the side walls and the top, the heat source unit needs to be lifted from the bottom and carried to the installation site by the installer. Even when not packaged, the heat source unit needs to be handled by a handler, i.e. lifted and moved to the installation site or during maintenance.

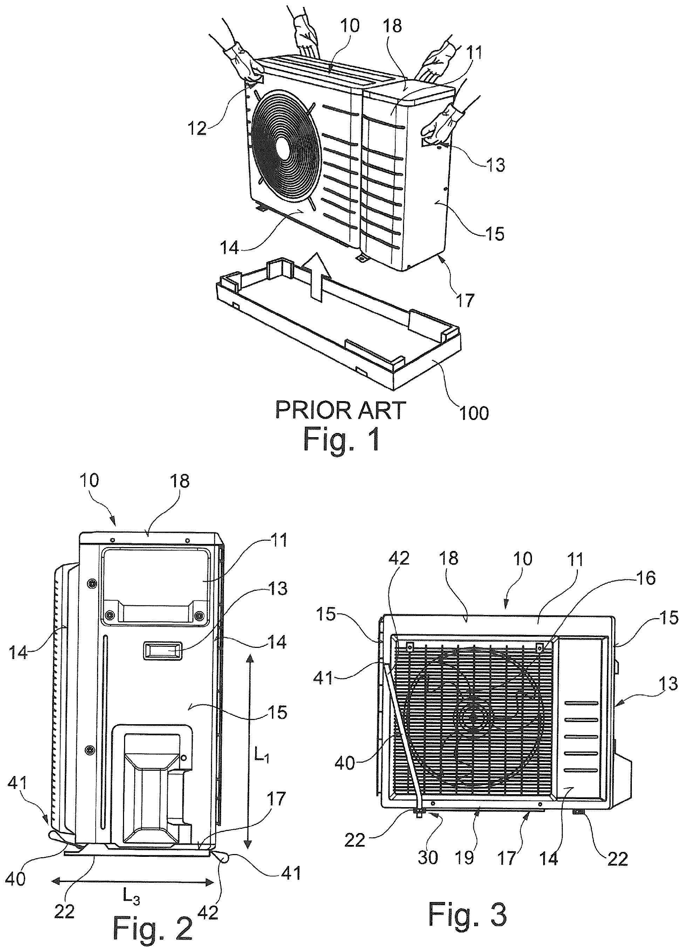

It is known to, for this purpose, incorporate different types of handles into the casing of the heat source unit. The handles may be made of plastic or sheet metal in form of a recessed grip or even as a grip protruding from the casing of the heat source unit. One example is shown in Figure 1, in which the casing 11 of the heat source unit 10 comprises two recessed grips 12 incorporated into the casing 11. In the particular example, one recessed grip 12 is provided in a longitudinal side face 14 of the heat source unit 10, whereas another recessed grip 13 is provided in a transverse side face 15 of the heat source unit 10.

However and depending on the size of the person (handler or installer), the position of the handles may not be considered appropriate from an ergonomic point of view. In addition and depending on the space in which the heat source unit is to be installed, some of the handles may not be accessible in the final installation position of the heat source unit. This particularly applies, if the heat source unit is to be positioned with its side face/-s comprising a handle close to a wall.

Finally, the use of the handles requires additional parts and design work to integrate the handles into the casing of the heat source unit. Thus, the handles are also perceived disadvantageous from a cost perspective.

The Japanese patent application JP 2011 257029 A, forming the basis for the preamble of claim 1, refers to an outdoor unit for an air conditioner that includes: a top plate; and a pair of legs having at least insertion openings in the lower part thereof, to which forklift forks of the forklift are inserted. The outdoor unit can be lifted up for transportation with a belt or a rope without losing the workability for transportation by a forklift.

### SUMMARY

In view of the aforesaid, it is the technical problem to be solved by the present disclosure to provide a heat source unit which is easy to handle, even at limited space, and is beneficial from a cost perspective view.

This technical problem is solved by a heat source unit according to claim 1. Embodiments are named in the dependent claims, the following description as well as the drawings.

According to an aspect, a heat source unit of a heat pump is suggested. The heat pump may use any kind of heat source. In one example, the heat pump is an air heat pump using air as the heat source. The heat pump may be employed in an air conditioner for space cooling and/or heating or in a water heater. The heat pump comprises a heat source unit having a casing. The casing may have opposite longitudinal side faces and opposite transverse side faces as well as a bottom portion (including a bottom plate) and a top. In addition, installation feet may be provided at a lower surface of the bottom portion (e.g. the bottom plate) for fixing the heat source unit to a horizontal surface or a mounting bracket fixed to a horizontal or vertical surface. The bottom portion of the casing has opposite longitudinal edges, for example along the longitudinal side faces, and opposite transverse edges, for example along the transverse side faces. The casing of the heat source unit may accommodate several components of the heat pump including a heat source heat exchanger, a fan and/or a compressor. In a particular example, the heat exchanger is to be fluidly connected to a refrigerant circuit of the heat pump and depending on the purpose (cooling and/or heating) functions as a condenser and/or evaporator in the refrigerant circuit of the heat pump. The fan is particularly employed, if air is used as a heat source and for inducing an air flow through the heat exchanger. The compressor is as well to be incorporated into the refrigerant circuit of the heat pump. Due to the accommodation of several components, the heat source unit may weigh between 50 and 60 kg or even more.

In order to transport the heat source unit to an installation site, the heat source unit may be encased in a packaging. The packaging may comprise a bottom, such as a pallet or a bottom tray. The packaging may additionally comprise side walls and a top for completely encasing the heat source unit. Alternatively, the heat source unit may also be wrapped in a plastic film. When packaged, at least a part of the bottom portion of the casing of the heat source unit is received on the bottom of the packaging, e.g. in the bottom tray or on the pallet. In the example comprising the installation feet, the installation feet rest on the bottom of the packaging, such as the bottom tray or the pallet, and are supported by the bottom of the packaging.

In order to lift the heat source unit from the ground and/or from the bottom of a packaging and carry the heat source unit to the installation site, optionally after having removed the remainder (except for the bottom) of the packaging, the present disclosure suggests at least one flexible and longitudinal strap positioned below the bottom portion of the casing, and if a packaging as described above is present between the bottom portion of the casing and the bottom of the packaging. Accordingly, the strap spans a lower surface of the bottom portion (e.g. the bottom plate) outside the casing from one longitudinal edge to an opposite longitudinal edge of the bottom portion of the casing of the heat source unit. The flexible strap has opposite longitudinal ends, which extend from the opposite longitudinal edges of the bottom portion of the casing of the heat source unit. In use, a person such as an installer or handler grips the opposite longitudinal ends of the flexible strap by his/her hand. In order to adapt the length of the strap to the person's size, the person may wrap or wind the ends of the strap around his/her hand as needed. In a particular example, the length of the strap is adapted so that each end may be wound around a person's hand at least twice. In the first place, the length of the strap is adapted to an average size of an adult, wherein the body dimensions of the Belgian population of 2005 (DINBelg 2005) for adult men in the age between 18 to 65 years was used as a reference. In this context, a length L₁ of the strap from the bottom portion of the casing or more particularly from the longitudinal edge of the bottom portion to the end was selected to meet the needed length for an average sized adult. As explained further below, the length L₁ may also be governed by the height of a handle (if still present). Further, a width of the heat source unit in a direction between the longitudinal edges was added as a length L₂ to the length of the strap. Subsequently, a certain length L₃ was added for each end to enable winding of each end of the strap around a person's hand at least twice as explained above and/or to take into account that the flexible strap will be pulled away from the heat source unit when carrying. Hence, the total length L_{T} of the strap was selected as the sum of 2*L₁, L₂ and 2*L₃ (L_{T} = 2*L₁ + L₂ + 2*L₃). For most applications, the length of the strap was in the range between 1000 mm and 2000 mm. In another example, the length of the strap was in the range between 1200 mm and 1800 mm.

After gripping and optionally winding the ends of the strap about the hands, the person is able to lift the heat source unit from ground or the bottom of the packaging and carry the heat source unit to the installation site. Due to the use of a strap, the person may easily adapt the gripping height to his/her size. In addition, the strap may be pulled away from the heat source unit and even be used to "swing" the heat source unit into place. As a result, the use of a strap provides for better ergonomics and enables easier positioning of the heat source unit at an insulation site when only limited space is available, such as close to a wall. In addition, the suggested solution is relatively inexpensive and does not require integration and design work related to the casing of the heat source unit.

According to an aspect, the flexible strap comprises loops at the opposite ends. The formation of loops enables easier gripping of the ends and also wrapping of the ends about the hands. In a particularly simple embodiment, the ends of the strap are reverted and sewn to each other for forming the loop. In a particular example, two transverse and longitudinally distanced seems are used. The size of the loops is adapted to an average adult men hand breadth taking into account that the person will wear gloves, wherein the body dimensions of the Belgian population of 2005 (DINBelg 2005) for adult men in the age between 18 to 65 years was used as a reference. In a particular example, the length of the loop was in a range between 100 mm and 200 mm or 120 and 180 mm. In a particular example, the length of the loop was 150 mm ± 10 mm. As an alternative to the formation of a loop, handles, e.g. of plastic material, may be attached to the ends of the strap.

Further, testing has been shown that a textile material is most suitable for the flexible strap from the viewpoint of costs, strength and flexibility. In one embodiment, a textile of plastic material such as polyester (PES) is used. However, other materials, such as polypropylene (PP) may be used as well. In this context, the term "textile" refers to any material made of interlacing fibers. Specifically, a fabric may be used, wherein a fabric is a material made through weaving, knitting, spreading, crocheting or bonding. Other materials beside textiles meeting the requirements regarding strength and/or flexibility may be used as well.

To provide for a neat packaging, the flexible strap is folded, preferably Z-folded, between its opposite ends. Accordingly, the flexible strap may be disposed to a major proportion below the bottom portion of the casing of the heat source unit with only the opposite ends protruding between the bottom of the packaging and the longitudinal edges of the bottom portion of the casing of the heat source unit. Accordingly, the flexible strap is to a great proportion hidden below the bottom portion of the heat source unit. For unpacking and lifting the heat source unit from the bottom, the person grips the protruding ends of the strap and pulls at the ends, whereby the strap is unfolded and extended to its total length. Alternatively, the strap may as well be pushed (stuffed) in between the casing of the heat source unit and the packaging, particularly between the bottom portion of the casing of the heat source unit and the bottom of the packaging without folding the strap.

To indicate the strap to the person a visual indication of the strap may be beneficial. For this purpose, the flexible strap is colored according to a desired color coding. Many manufacturers have a color coding indicating that the part is "designated for installation purposes only". In other words, a specific color is used to indicate to the person that the respective part is only used for transportation and/or installation purposes and may be discarded after installation. In one example, the strap is colored according to a color coding designating the strap "for installation purpose only". In one particular example, the flexible strap is yellow.

According to a further aspect, a foot is attached to a lower surface of the bottom portion extending between the opposite longitudinal edges of the bottom portion for supporting the heat source unit at the installation site. In order to avoid displacement or slipping of the flexible strap in a longitudinal direction of the bottom portion, it has been proven beneficial to provide an opening at one end of the foot and pass the flexible strap through the opening. Thereby, the flexible strap is restrained in a widthwise direction and fixed in a position along the longitudinal edge of the bottom portion. A second opening may be provided at an opposite second end of the foot and the flexible strap may also be passed through the second opening. The foot is usually made of sheet-metal and the opening may be formed by stamping. As a consequence, sharp edges may be formed at the edges of the opening/-s. In order to avoid such sharp edges, the opening/-s may have a curved shape, such as an oval or elliptic shape. In addition, the opening/-s may be stamped in a direction from the outside (or top side) toward the inside (bottom side). To put it differently, the stamping direction is a direction from that first end of the foot to which the opening is provided toward the other opposite second end of the foot. Thus, it may be avoided that the strap comes into contact with any sharp edge. Alternatively or in addition, a protection member, e.g. of plastic material, may be inserted into the opening to protect the flexible strap from any sharp edges.

Particularly when the flexible strap is to be folded between the opposite longitudinal edges of the bottom portion as explained earlier, but also in other cases, passing of the flexible strap through two openings may be perceived cumbersome. Thus, it may be beneficial that the foot comprises a first retainer clip at the other opposite end (instead of the second opening), wherein the flexible strap is engaged with the first retainer clip. The first retainer clip functions similar to a paper clip. Thus, the first retainer clip has a first portion and a second portion with the flexible strap being inserted between the first and second portion and thereby engaged with the first retainer clip. The first and second portions are connected at a connecting portion and the second portion may be separated from the first portion, for example, by a "U"-shaped cut. Accordingly, the first retainer clip is open at the side of the horizontal leg of the "U" or opposite to the connecting portion. The flexible strap may easily be inserted at the open side of the first retainer clip, i.e. from a side of the second portion opposite to the connecting portion. Furthermore, the second portion may be bent out of the plane of the first portion to accommodate several layers of the flexible strap when folded and/or to adapt to the thickness of the flexible strap.

In one example, the first retainer clip is oriented, e.g. with its second portion or the "U" perpendicularly to the longitudinal extension of the flexible strap and open for inserting the flexible strap at a side opposite to the transverse edge of the bottom portion which is closest to the foot. As a consequence, it may be prevented that the flexible strap, when carrying the heat source unit, slips out of the first retainer clip, because the flexible strap is always pulled away from the open side of the first retainer clip, i.e. toward the connecting portion.

In order to securely retain the flexible strap, particularly when folded, the foot may further comprise one or more second retainer clips located between the opening and the first retainer clip or, if the first retainer clip is substituted by a second opening, the second opening. In this context, at least one of the second retainer clips is 180° reversely oriented as compared to the first retainer clip to enable easier engagement of the flexible strap with the first and second retainer clips. If an even number of second retainer clips is provided, the second retainer clips may be 180° reversely orientated compared to each other.

To provide for a cost-effective manufacture, the first and/or second retainer clips are integrally formed with the foot. In one particular example, the first and/or second retainer clips are formed by stamping and bending.

As previously discussed, the heat source unit comprises a heat exchanger (heat source heat exchanger). According to an aspect, the heat exchanger is a so-called free hanging heat exchanger, which is merely supported at discrete and distanced locations at its bottom along a length of the heat exchanger. Except for the supported locations, the heat exchanger bottom is not covered by the bottom portion (bottom plate). The bottom portion (bottom plate) as well as the feet may serve as supporting portions supporting the bottom of the heat exchanger at the discrete locations. Depending on the circumstances, it is likely that condensation water is formed on the outer surfaces of the heat exchanger flowing down towards the bottom portion. Thus, the condensation water may accumulate in the supporting portions of the bottom portion and/or the feet. Accumulated water in these portions may pose problems particularly under cold weather conditions relating to the formation of ice. In order to avoid the accumulation of water if the heat exchanger is e.g. supported by a foot, but at least positioned above a portion of the foot, the first retainer clip 25 is positioned in said portion. In order that the condensation water may pass through the foot and be led away from the heat source unit, the first retainer clip 25 forms a hole 47. As a consequence, the accumulation of condensation water on the foot and consequently the formation of ice may be avoided.

In one embodiment of the present disclosure, all handles may be substituted by flexible straps. Thus, according to an aspect, two of the flexible straps may be provided and positioned in a distance from each other in association with the respective opposite transverse edges of the bottom portion.

In this embodiment, it is preferred to provide two of the feet, the feet being identical but 180° reversely oriented. Accordingly, an optimized manufacturing process may be achieved with the benefit that only one kind of foot has to be produced and stocked. Yet, also different feet are conceivable.

Alternatively to the above embodiment, only one of the handles can be substituted. Hence, according to one embodiment, the casing "still" comprises an integrated handle distanced to the flexible strap for lifting the heat source unit from the bottom and carrying the heat source unit to the installation site. The handle is positioned at a predetermined height of the casing. The height is defined in the direction perpendicular to the bottom portion of the casing. If a handle is provided, the length of the flexible strap needs to be adapted to the height of the handle. Thus, in the particular example, the length L_{T} of the flexible strap is equal to or larger than twice a length L₁ corresponding to the height at which the handle is positioned plus a length L₂ corresponding to the width of the heat source unit in a direction between the longitudinal transverse edges and in one particular embodiment of the width of the bottom portion between the opposite longitudinal edges from which the opposite ends of the flexible strap extend. Subsequently, a certain length L₃ may be added to enable winding of each end of the strap around a person's hand at least twice as explained above and to provide for some compensation taking into account that the strap is pulled away from the casing when carrying the heat source unit. Hence, the total length L_{T} of the strap was selected as the sum of 2*L₁, L₂ and 2*L₃ (L_{T} = 2*L₁ + L₂ + 2*L₃). In one particular example, if the height of the handle is 460 mm and the width of the heat source unit is 360 mm, the total length L_{T} was selected to be 1350 mm, including 35 mm at each end to compensate for winding the ends about the person's hand and considering that the strap will be pulled towards the person when carrying the heat source unit (1350 mm = 2*460 mm + 360 mm + 2*35mm).

### BRIEF DESCRIPTION OF DRAWINGS

In the following, additional features, advantages and embodiments are described with respect to the accompanying drawings in which:
Figure 1 shows a perspective view of a heat source unit according to the prior art;
Figure 2 shows a side view on one transverse side face of a heat source unit including a strap according to the present disclosure in a transportation state with the bottom of the packaging being omitted;
Figure 3 shows a side view on one longitudinal side face of the heat source unit of Figure 2 with the strap in a use state;
Figure 4 shows a bottom view of one foot of the heat source unit of Figure 2;
Figure 5 shows a cross-section along the line D-D in Figure 4;
Figure 6 shows an enlarged perspective partial view on one end of the foot of the heat source unit in Figure 2;
Figure 7A to C shows a schematic representation explaining the lifting and carrying of the heat source unit using the strap with the bottom of the packaging being omitted;
Figure 8 shows a perspective view of a heat source unit including two straps according to the present disclosure in a transportation state;
Figure 9 shows a perspective view of the heat source unit of Figure 8 with the straps in a use state;
Figure 10 shows a perspective view of the heat source unit of Figure 9 after being removed from the bottom of the packaging; and
Figure 11 shows a bottom view of the bottom portion of the heat source unit of Figures 8 to 10 with one strap being omitted and the other strap being shown in the transportation state.

### DESCRIPTION OF EMBODIMENTS

Various embodiments according to the present disclosure are explained with reference to Figures 2 to 11. It is to be understood that the same or similar elements are denoted with the same reference numerals throughout the description of the embodiments and that a repetitive description of these elements is omitted.

A first embodiment of the present disclosure is described with respect to Figures 2 to 7.

The heat source unit comprises the heat source unit 10. In the present example, the heat source unit 10 is an air heat source unit using air as a heat source. The heat source unit 10 comprises a casing 11. The casing 11 accommodates a heat source heat exchanger (hidden by the casing 11) to be connected to a refrigerant circuit of a heat pump. The heat source heat exchanger is configured to be flown through by air, wherein the air flow is induced by a fan 16 (see Figure 3) also accommodated in the casing 11. As a result, the heat source heat exchanger is able to exchange heat between the air and refrigerant flowing in the refrigerant circuit of the heat pump. In addition, the casing 11 may also accommodate a compressor (hidden by the casing 11) contained in the refrigerant circuit of the heat pump.

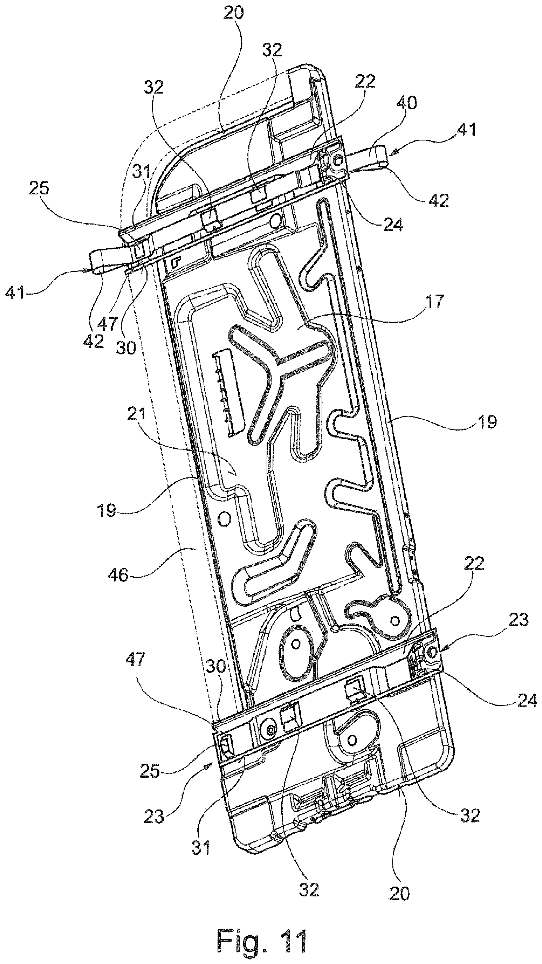

The casing 11 comprises two opposite longitudinal side faces 14, two opposite transverse side faces 15 and a top 18. Moreover, the casing 11 has a bottom plate 17 (bottom portion), which in the present example is configured to support some of the components accommodated in the casing 11, such as the heat source heat exchanger 46 as shown by broken line in Figure 11 and the not shown compressor.

The bottom plate 17 has opposite longitudinal edges 19 (also compare Figure 11) along the longitudinal side faces 14. Further, opposite transverse edges 20 of the bottom plate 17 extend perpendicularly to the longitudinal edges 19.

Feet 22 are attached to a lower surface (outer surface) 21 of the bottom plate 17 in a distance to each other along the longitudinal direction of the bottom plate 17. In one example, each foot 22 is associated to one of the transverse edges 20 of the bottom plate 17. The feet 22 are primarily used to attach the heat source unit 10 to a horizontal surface and/or to a mounting bracket (not shown). The mounting bracket may be fixed to a horizontal surface or to a vertical surface such as a wall. In many applications, the feet 22 are slid into the mounting bracket during the installation process.

As again best visible from Figure 11, the feet 22 extend between the longitudinal edges 19 of the bottom plate 17. The feet 22 are longitudinal and are oriented with their longitudinal direction perpendicular to the opposite longitudinal edges 19 and, hence, parallel to the transverse edges 20. In one particular example, the feet 22 are clinched to the lower surface 21 of the bottom plate 17.

The heat source unit according to the present disclosure further comprises a flexible strap 40. The strap 40 is flat and longitudinal (its largest dimension is its length and its thickness is far smaller than its length and width). In the particular embodiment, the strap is made of textile material, such as PES (polyester) textile material. Yet, other materials than textile material and/or PES are conceivable as well.

The strap is preferably colored to indicate to the person that the strap is "for insulation purpose only" and may be discarded after having lifted the heat source unit 10 from the bottom and carried it to the installation site. In a particular example, the strap may be yellow. However, other colors are conceivable as well.

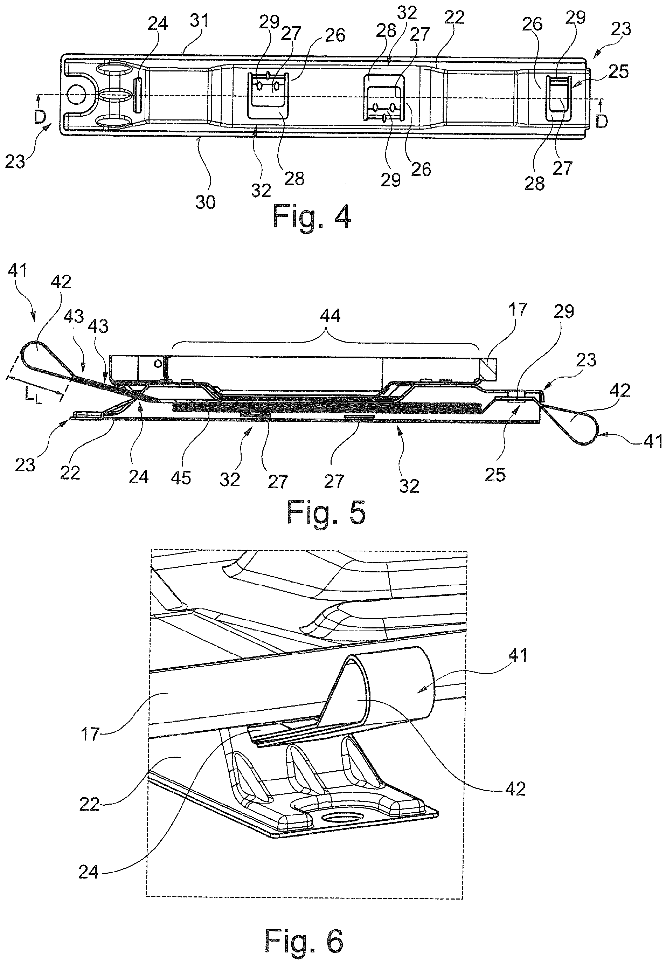

The strap 40 has opposite ends 41 in its longitudinal direction. Loops 42 are formed at the ends 41. In the present embodiment, the ends of the strap 40 are reverted and sewn together in an overlapping portion, thereby creating the loops 42. Preferably two transverse seams 43 (see Figure 5) are used which are located in a distance to each other in the longitudinal direction of the strap 40. The size of the loops is primarily governed by a hand breadth of an average adult man (DINbelg 2005 : 88 mm) also taking into account that persons usually wear gloves. Thus, in a particular embodiment, a length L_{L} in a stretch stage of the loop 42 is 150 mm ± 10 mm from the last seam 43 adjacent to the loop 42 to the end of the strap 41.

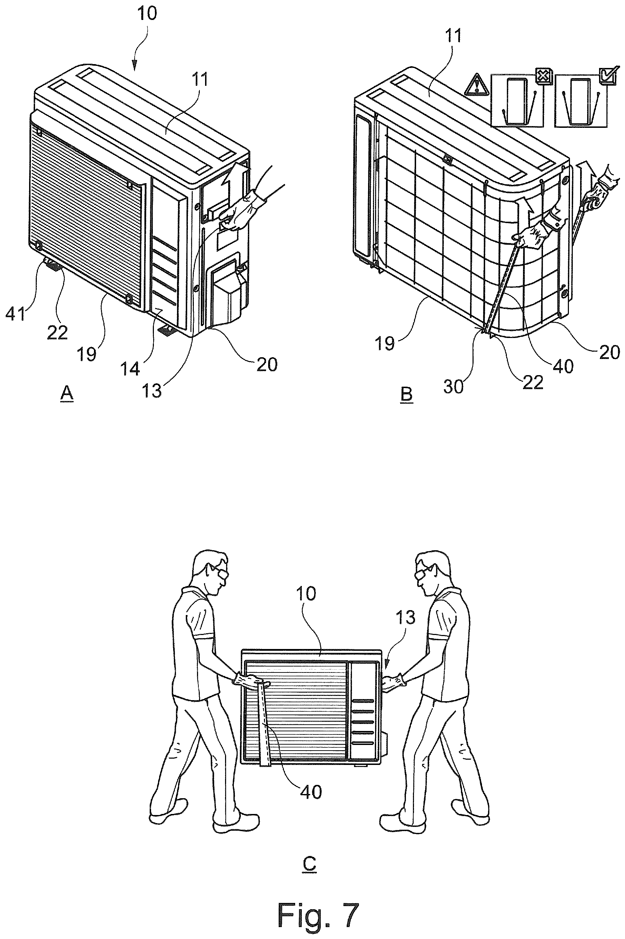

In addition, the length L_{T} of the strap 40 between the ends 41 has been selected as follows. As shown in Figure 2, the casing 11 still comprises an integrated handle in the form of a recessed grip 13. The recessed grip 13 is provided at a height from the bottom plate 17 to the recessed grip 13 of 460 mm and the width of the heat source unit in the transverse direction is 360 mm. Accordingly, the height governs the length L₁ and the width governs the length L₃. The total length L_{T} was then selected to be 1350 mm, including 35 mm at each end 41 to compensate for winding the ends 41 about the person's hand to adapt to his/her size and considering that the strap 40 will be pulled towards the person (see Figures 3 and 7B) when carrying the heat source unit (1350 mm = 2*460 mm (L₁) + 360 mm (L₃) + 2*35mm (L₂)). Hence, L_{T} = 1350 mm ± 15 mm in the present example.

Yet, the length may also be governed by the average size of an adult man rather than the height of an optional handle. In this context, particularly the elbow and fist height are considered important.

In the following, it is explained in more detail how the strap 40 is incorporated into the heat source unit 10. In the particular example, the strap 40 is attached to the foot 22. The foot 22 is accordingly adapted to receive the strap 40 as explained in the following with reference to Figures 4 to 6 and 11).

As previously explained, the foot 22 is longitudinal having opposite longitudinal ends 23. The foot 22 is provided with an opening 24 at one of the ends 23. The opening 24 may be stamped from the sheet metal the foot 22 is made of. In order to avoid sharp edges which bounder the opening 24, the stamping direction may be of importance. In a particular embodiment, the opening 24 is stamped from the outside (top side) toward the inside (bottom side). Thus, any sharp edges are directed towards the inside and away from the strap 40 so as to avoid contact of the strap 40 with the sharp edges.

In addition, a first retainer clip 25 is integrated into the foot 22 at the opposite end 23. The retainer clip 25 comprises two portions, a first portion 26 and a second portion 27. The first portion 26 and the second portion 27 are formed by a U-shaped cut 28, wherein the first portion 26 surrounds the second portion 27. Due to the cut 28, the first portion 26 and the second portion 27 are connected to each other at a connecting portion 29. In addition and as best visible from Figure 5, the first retainer clip 25 is bent out of the plane of the first portion 26 at the connecting portion 29. Because of this configuration, the first retainer clip 25 defines an opening 47 (see Figure 11), which allows that condensation water flowing down from the heat exchanger 46 (shown in broken lines in Figure 11), may pass through the foot via the opening 47 and be led away from the heat source unit. As a result, the accumulation of condensation water on the foot and the formation of ice under cold weather conditions may be prevented. As previously indicated, the strap is to be removed after the installation of the heat source unit and to be discarded. After the removal of the strap, the strap does not longer block the opening 47 and any condensation water may freely flow through the opening 47 and be led away from the heat source unit.

As shown in Figure 4, the first retainer clip 25 is open at the side of a first longitudinal edge 30 of the foot 22 and closed at the connecting portion 29 at a second opposite longitudinal edge 31 of the foot 22. The foot 22 is mounted to the bottom 17 of the heat source unit 10 so that its first longitudinal edge 30 is directed away from the transverse edge 20 or the transverse side face 15 to which the foot 22 is associated to. To put it differently, the first longitudinal edge 30 of the foot 22 is directed inwards with respect to the transverse edge 20 of the bottom plate 17. Thus, slipping out of the strap 40 can be avoided when carrying the heat source unit 10.

In addition, the foot 22 of the present example comprises two second retainer clips 32 between the opening 24 and the first retainer clip 25. These second retainer clips 32 are configured similar to the first retainer clip 25. However, their dimension (width) in the longitudinal direction of the foot 22 may be larger than that of the first retainer clip 25 as shown in Figure 4.

Further, the second retainer clip 32 located closer to the first retainer clip 25 is reversed by 180° as compared to the first retainer clip 25. Thus, the connecting portion 29 of the first retainer clip 25 is located adjacent the second longitudinal edge 31 whereas the connecting portion 29 of the second retainer clip 32 closest to the first retainer clip 25 is located adjacent the first longitudinal edge 30.

In addition, the second retainer clips 32 are alternately oriented and rotated by 180° relative to each other. Thus, the second retainer clip 32 adjacent the opening 24 is oriented in the same manner as the first retainer clip 25.

The first and second retainer clips 25, 32 are preferably manufactured by stamping and bending. Thus, the retainer clips 25, 32 may be integrated into the foot 22.

In order to retain the strap 40 in the transportation state in the foot 22, the strap 40 has a folded portion 44 in which the strap 40 is folded (Z-folded) so that a plurality of layers 45 overlaps. The folded portion 44 is retained by the second retainer clips 32. Due to the reversed orientation of the second retainer clips 32, it is easy to fold and insert the strap 42 into the second retainer clips 32.

In addition, one end 41 of the strap 40 is passed through the opening 24 at one end 23 of the foot 22 and the other end 41 is inserted into the first retainer clip 24 and engaged therewith at the opposite end 23.

As will also be apparent from Figures 2, 5 and 6, the opposite ends 41 of the strap 40 protrude from the foot 22 and thereby also from the bottom plate 17 of the heat source unit 10 to be easily gripped by a person.

The packaging of the heat source unit is not shown in Figures 2 to 7. Yet, a packaging may comprise a bottom such as a bottom tray 100 as shown in Figure 1 or Figures 8 and 9 or a pallet on which the heat source unit 10 is supported and received. Thus, the strap 40 is positioned between the bottom plate 17 and the bottom of the packaging such as the bottom tray 100.

In the following, unpacking and carrying of the heat source unit 10 will be explained with respect to Figures 7A to C.

As shown in Figure 7A, a first person grips the recessed grip 13.

A second person grips the opposite ends 41 of the strap 40 and pulls. By pulling the ends 41 of the strap 40 in opposite directions, the folded portion 44 of the strap 40 unfolds and the strap 40 extends through the opening 24 and from the first retainer clip 25. As shown in Figure 7B, the second person should take care that the length L₁ should be the same at the opposite longitudinal side edges 19. This may be adjusted by pulling at one end 41 and releasing the opposite end 41. Subsequently, the second person inserts his/her hands into the loops 42 and depending on his/her size winds the strap 40 about his/her hands to adapt the length of the strap 40 to his/her size.

Finally, the first and second person may lift the heat source unit 10 from the ground or if still packaged from the bottom such as a bottom tray 100 and carry the heat source unit 10 to the installation site.

As previously indicated, many heat source units 10 need to be installed at the installation site by sliding the feet 22 into not shown mounting brackets. The strap 40 may simplify this process, because the heat source unit 10 may be swung into the mounting bracket by use of the strap 40.

After the heat source unit 10 has been mounted, the strap 40 may be removed from the foot 22 by pulling at one end 41 and finally be discarded.

In addition, the strap 40 may simplify the installation process when the heat source unit 10 is to be installed in limited space, e.g. with one of its longitudinal side faces 14 close to a wall. In this instance, the recessed grip 13 provided in a transverse side face 15 does not pose a problem and the end 41 of the strap 40 close to the wall may be pulled towards the opposite transverse side face 15 so that the heat source unit 10 may still be easily carried.

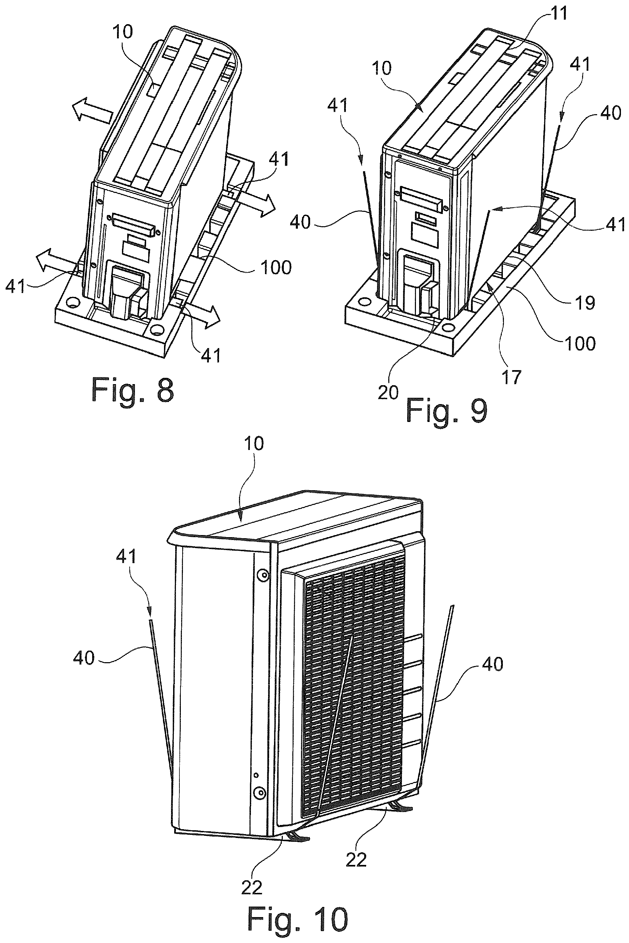

To even further simplify the lifting and carrying and/or to even substitute the recessed grip 13, two of the straps 40 may be integrated into the two feet 22, respectively. This embodiment is shown with respect to Figures 8 to 11.

In this instance, it is beneficial to produce identical feet 22 but to attach the feet 22 in a reversed orientation (rotated by 180°) to the bottom plate 17.

Alternatively, it is also possible, as shown in Figure 11, to produce different feet 22 in which the retainer clips 25 and 32 are disposed in a reversed orientation (rotated by 180°).

Otherwise, the second embodiment is similar to the first embodiment. Yet, the loops 42 at the ends 41 have been omitted in this embodiment, but could certainly be provided.

In use, the two persons respectively pull at the opposite ends 41 of the straps 40 as indicated in Figure 8 and, thereby, unfold the strap 40. Subsequently and depending on his/her size, the person winds the ends 41 of the strap 40 about his/her hands to adapt the length of the strap 42 to his/her size as explained with respect to the first embodiment above.

After having securely gripped the ends 41 of the strap 40, the persons lift the heat source unit 10 from the ground or bottom tray 100 (see Figure 10) and carry it to the installation site as explained earlier.

The use of the strap/-s 40 avoids the need to integrate a handle such as the recessed grip 13 into the casing 11 of the heat source unit 10 making the solution relatively cost-effective.

Further, the length of the strap 40 may easily be adapted to the size of the person by winding the ends 41 about the person's hand. Hence, a more ergonomic solution adaptable to various sizes of persons at the installation site is proposed.

**REFERENCE LIST**

| | |
|---|---|
| Heat source unit | 10 |
| Casing | 11 |
| Recessed grips | 12, 13 |
| Longitudinal side face of casing | 14 |
| Transverse side face of the casing | 15 |
| Fan | 16 |
| Bottom portion | 17 |
| Top | 18 |
| Longitudinal edges of bottom portion | 19 |
| Transverse edges of bottom portion | 20 |
| Lower surface of bottom portion | 21 |
| Foot | 22 |
| Longitudinal end of foot | 23 |
| Opening | 24 |
| Retainer clip | 25 |
| First portion of retainer clip | 26 |
| Second portion of retainer clip | 27 |
| U-shaped cut | 28 |
| Connecting portion of retainer clip | 29 |
| First longitudinal edge of foot | 30 |
| Second longitudinal edge of foot | 31 |
| Second retainer clip | 32 |
| Flexible strap | 40 |
| End of strap | 41 |
| Loup | 42 |
| Seam | 43 |
| Folded portion | 44 |
| Layers of strap | 45 |
| Heat exchanger | 46 |
| Opening | 47 |
| Bottom tray | 100 |

## Claims

1. Heat source unit assembly of an air conditioner comprising:
the heat source unit (10), the heat source unit comprising a casing (11) having a bottom portion (17) having opposite longitudinal edges (19) and opposite transverse edges (20);
at least one flexible strap (40) positioned below the bottom portion (17) of the casing (11), the flexible strap (40) having opposite ends (41) extending from the opposite longitudinal edges (19) of the bottom portion (17) of the casing (11) and being configured for being gripped
**characterized in that** the heat source unit further comprises a packaging having a bottom (100), wherein at least part of the bottom portion (17) of the casing (11) is received on the bottom (100) of the packaging, and wherein the flexible strap (40) is positioned between the bottom portion (17) of the casing (11) and the bottom (100) of the packaging.

2. Heat source unit assembly according to claim 1, wherein the flexible strap (40) comprises loops (42) at the opposite ends (41) .

3. Heat source unit assembly according to claim 1 or 2, wherein the flexible strap (40) is made of textile material.

4. Heat source unit assembly according to any one of the preceding claims, wherein the flexible strap (40) is folded, preferably Z-folded, between its opposite ends (41) .

5. Heat source unit assembly according to any one of the preceding claims, wherein the flexible strap (40) is colored, preferably in yellow.

6. Heat source unit assembly unit according to any one of the preceding claims, wherein a foot (22) is attached to the bottom portion (17) extending between the opposite longitudinal edges (19) of the bottom portion for supporting the heat source unit (10) at the installation site, the foot (22) comprising an opening (24) at one end (23), wherein the flexible strap (40) extends through the opening (24).

7. Heat source unit assembly according to claim 6, wherein the foot (22) comprises a first retainer clip (25) at the other opposite end (23), wherein the flexible strap (40) is engaged with the retainer clip (25).

8. Heat source unit assembly according to claim 7, wherein the first retainer clip (25) is oriented perpendicularly to the longitudinal extension of the flexible strap (40) and open for inserting the flexible strap (40) at a side opposite to the transverse edge (20) of the bottom portion (17) which is closest to the foot (22).

9. Heat source unit assembly according to claim 7 or 8, wherein the foot (22) further comprises one or more second retainer clips (32) located between the opening (24) and the first retainer clip (25), wherein at least one of the second retainer clips (32) is 180° reversely oriented as compared to the first retainer clip (25) .

10. Heat source unit assembly according to any one of claims 7 to 9, wherein the first and/or second retainer clips (25, 32) are integrally formed with the foot (22).

11. Heat source unit assembly according to anyone of claims 7 to 10, further comprising a heat exchanger (46) positioned above a portion of the foot (22), wherein the first retainer clip (25) is positioned in the portion, the first retainer clip (25) forming a hole (47) being configured to be passed through by condensation water formed on the outside of the heat exchanger.

12. Heat source unit assembly according to any one of the preceding claims, comprising two of the flexible straps (40) which are positioned in a distance from each other.

13. Heat source unit assembly according to claim 12 and any one of claims 6 to 11, comprising two of the feet (22), the feet being identical but 180° reversely oriented.

14. Heat source unit assembly according to any one of claims 1 to 11, wherein the casing (11) comprises an integrated handle (13) distanced to the flexible strap (40), the handle (13) being positioned at a predetermined height of the casing, wherein the length of the flexible strap (40) is equal to or larger than twice the height at which the handle (13) is positioned plus the width of the heat source unit (10) in a direction between the opposite longitudinal edges (19) of from which the opposite ends (41) of the flexible strap (40) extend.

## Patentansprüche

1. Wärmequelleneinheit-Montage einer Klimaanlage, umfassend:
eine Wärmequelleneinheit (10), wobei die Wärmequelleneinheit ein Gehäuse (11) umfasst, das einen Bodenabschnitt (17) aufweist, der gegenüberliegende Längskanten (19) und gegenüberliegende Querkanten (20) aufweist;
mindestens einen biegsamen Riemen (40), der unter dem Bodenabschnitt (17) des Gehäuses (11) positioniert ist, wobei der biegsame Riemen (40) gegenüberliegende Enden (41) aufweist, die sich von den gegenüberliegenden Längskanten (19) des Bodenabschnitts (17) des Gehäuses (11) erstrecken und konfiguriert sind, um gegriffen zu werden,
**dadurch gekennzeichnet, dass** die Wärmequelleneinheit weiter eine Verpackung umfasst, die einen Boden (100) aufweist, wobei mindestens ein Teil des Bodenabschnitts (17) des Gehäuses (11) auf dem Boden (100) der Verpackung aufgenommen ist und wobei der biegsame Riemen (40) zwischen dem Bodenabschnitt (17) des Gehäuses (11) und dem Boden (100) der Verpackung positioniert ist.

2. Wärmequelleneinheit-Montage nach Anspruch 1, wobei der biegsame Riemen (40) Schlaufen (42) an den gegenüberliegenden Enden (41) umfasst.

3. Wärmequelleneinheit-Montage nach Anspruch 1 oder 2, wobei der biegsame Riemen (40) aus Textilmaterial gefertigt ist.

4. Wärmequelleneinheit-Montage nach einem der vorstehenden Ansprüche, wobei der biegsame Riemen (40) zwischen seinen gegenüberliegenden Enden (41) gefaltet ist, vorzugsweise z-gefaltet.

5. Wärmequelleneinheit-Montage nach einem der vorstehenden Ansprüche, wobei der biegsame Riemen (40) gefärbt ist, vorzugsweise gelb.

6. Wärmequelleneinheit-Montage nach einem der vorstehenden Ansprüche, wobei am Bodenabschnitt (17) ein Standfuß (22) befestigt ist, der sich zwischen den gegenüberliegenden Längskanten (19) des Bodenabschnitts erstreckt, um die Wärmequelleneinheit (10) am Installationsort zu stützen, wobei der Standfuß (22) an einem Ende (23) eine Öffnung (24) umfasst, wobei der biegsame Riemen (40) sich durch die Öffnung (24) erstreckt.

7. Wärmequelleneinheit-Montage nach Anspruch 6, wobei der Standfuß (22) am anderen gegenüberliegenden Ende (23) eine erste Halteklammer (25) umfasst, wobei der biegsame Riemen (40) in die Halteklammer (25) eingreift.

8. Wärmequelleneinheit-Montage nach Anspruch 7, wobei die erste Halteklammer (25) senkrecht zur Längserstreckung des biegsamen Riemens (40) ausgerichtet ist und offen ist, um den biegsamen Riemen (40) an einer Seite gegenüberliegend zur Querkante (20) des Bodenabschnitts (17) einzufügen, die dem Standfuß (22) am nächsten liegt.

9. Wärmequelleneinheit-Montage nach Anspruch 7 oder 8, wobei der Standfuß (22) weiter eine oder mehrere zweite Halteklammern (32) umfasst, zwischen der Öffnung (24) und der ersten Halteklammer (25) gelegen, wobei mindestens eine der zweiten Halteklammern (32) verglichen mit der ersten Halteklammer (25) um 180° umgekehrt ausgerichtet ist.

10. Wärmequelleneinheit-Montage nach einem der Ansprüche 7 bis 9, wobei die erste und/oder zweiten Halteklammern (25, 32) integral mit dem Standfuß (22) gebildet sind.

11. Wärmequelleneinheit-Montage nach einem der Ansprüche 7 bis 10, weiter umfassend einen Wärmetauscher (46), der über einem Abschnitt des Standfußes (22) positioniert ist, wobei die erste Halteklammer (25) in dem Abschnitt positioniert ist, wobei die erste Halteklammer (25) ein Loch (47) bildet, das konfiguriert ist, um von Kondenswasser, das an der Außenseite des Wärmetauschers gebildet wird, durchlaufen zu werden.

12. Wärmequelleneinheit-Montage nach einem der vorstehenden Ansprüche, umfassend zwei der biegsamen Riemen (40), die in einem Abstand voneinander positioniert sind.

13. Wärmequelleneinheit-Montage nach Anspruch 12 und einem der Ansprüche 6 bis 11, umfassend zwei der Standfüße (22), wobei die Standfüße identisch, aber um 180° umgekehrt ausgerichtet sind.

14. Wärmequelleneinheit-Montage nach einem der Ansprüche 1 bis 11, wobei das Gehäuse (11) einen integrierten Griff (13) umfasst, der zum biegsamen Riemen (40) beabstandet ist, wobei der Griff (13) in einer vorbestimmten Höhe des Gehäuses positioniert ist, wobei die Länge des biegsamen Riemens (40) gleich oder größer ist als das Zweifache der Höhe, an der der Griff (13) positioniert ist, plus der Breite der Wärmequelleneinheit (10) in einer Richtung zwischen den gegenüberliegenden Längskanten (19), von denen sich die gegenüberliegenden Enden (41) des biegsamen Riemens (40) erstrecken.

## Revendications

1. Ensemble unité de source de chaleur d'un climatiseur comprenant :
l'unité de source de chaleur (10), l'unité de source de chaleur comprenant un boîtier (11) ayant une portion de fond (17) ayant des bords longitudinaux opposés (19) et des bords transversaux opposés (20) ;
au moins une sangle souple (40) positionnée sous la portion de fond (17) du boîtier (11), la sangle souple (40) ayant des extrémités opposées (41) s'étendant à partir des bords longitudinaux opposés (19) de la portion de fond (17) du boîtier (11) et étant configurées pour être saisies
**caractérisé en ce que** l'unité de source de chaleur comprend en outre un emballage ayant un fond (100), dans lequel au moins une partie de la portion de fond (17) du boîtier (11) est reçue sur le fond (100) de l'emballage, et dans lequel la sangle souple (40) est positionnée entre la portion de fond (17) du boîtier (11) et le fond (100) de l'emballage.

2. Ensemble unité de source de chaleur selon la revendication 1, dans lequel la sangle souple (40) comprend des boucles (42) au niveau des extrémités opposées (41).

3. Ensemble unité de source de chaleur selon la revendication 1 ou 2, dans lequel la sangle souple (40) est faite de matériau textile.

4. Ensemble unité de source de chaleur selon l'une quelconque des revendications précédentes, dans lequel la sangle souple (40) est pliée, de préférence pliée en Z, entre ses extrémités opposées (41).

5. Ensemble unité de source de chaleur selon l'une quelconque des revendications précédentes, dans lequel la sangle souple (40) est colorée, de préférence en jaune.

6. Ensemble unité de source de chaleur selon l'une quelconque des revendications précédentes, dans lequel un pied (22) est attaché à la portion de fond (17) s'étendant entre les bords longitudinaux opposés (19) de la portion de fond pour supporter l'unité de source de chaleur (10) au niveau du site d'installation, le pied (22) comprenant une ouverture (24) au niveau d'une extrémité (23), dans lequel la sangle souple (40) s'étend à travers l'ouverture (24).

7. Ensemble unité de source de chaleur selon la revendication 6, dans lequel le pied (22) comprend une première pince de retenue (25) au niveau de l'autre extrémité opposée (23), dans lequel la sangle souple (40) est en prise avec la pince de retenue (25).

8. Ensemble unité de source de chaleur selon la revendication 7, dans lequel la première pince de retenue (25) est orientée perpendiculairement à l'extension longitudinale de la sangle souple (40) et ouverte pour insérer la sangle souple (40) au niveau d'un côté opposé au bord transversal (20) de la portion de fond (17) qui est la plus proche du pied (22).

9. Ensemble unité de source de chaleur selon la revendication 7 ou 8, dans lequel le pied (22) comprend en outre une ou plusieurs secondes pinces de retenue (32) situées entre l'ouverture (24) et la première pince de retenue (25), dans lequel au moins l'une des secondes pinces de retenue (32) est orientée à 180° en sens inverse comparativement à la première pince de retenue (25).

10. Ensemble unité de source de chaleur selon l'une quelconque des revendications 7 à 9, dans lequel la première et/ou les secondes pinces de retenue (25, 32) sont formées d'un seul tenant avec le pied (22).

11. Ensemble unité de source de chaleur selon l'une quelconque des revendications 7 à 10, comprenant en outre un échangeur de chaleur (46) positionné au-dessus d'une portion du pied (22), dans lequel la première pince de retenue (25) est positionnée dans la portion, la première pince de retenue (25) formant un trou (47) étant configuré pour être traversé par l'eau de condensation formée à l'extérieur de l'échangeur de chaleur.

12. Ensemble unité de source de chaleur selon l'une quelconque des revendications précédentes, comprenant deux des sangles souples (40) qui sont positionnées à une distance l'une de l'autre.

13. Ensemble unité de source de chaleur selon la revendication 12 et l'une quelconque des revendications 6 à 11, comprenant deux des pieds (22), les pieds étant identiques mais orientés à 180° en sens inverse.

14. Ensemble unité de source de chaleur selon l'une quelconque des revendications 1 à 11, dans lequel le boîtier (11) comprend une poignée intégrée (13) à distance de la sangle souple (40), la poignée (13) étant positionnée à une hauteur prédéterminée du boîtier, dans lequel la longueur de la sangle souple (40) est supérieure ou égale à deux fois la hauteur à laquelle la poignée (13) est positionnée plus la largeur de l'unité de source de chaleur (10) dans une direction entre les bords longitudinaux (19) opposés à partir desquels les extrémités opposées (41) de la sangle souple (40) s'étendent.
